# EUROPÄISCHE PATENTSCHRIFT

(11) **EP 3 477 121 B1**
(45) Veröffentlichungstag und Bekanntmachung des Hinweises auf die Patenterteilung: **14.10.2020**
(21) Anmeldenummer: 18201815.0
(22) Anmeldetag: 22.10.2018
(51) Int. Cl.: F15B 13/02, G05D 16/00, F15B 11/072, F16K 37/00

(54) **DRUCKBEGRENZUNGSEINHEIT FÜR EINEN DRUCKÜBERSETZER SOWIE EIN DRUCKÜBERSETZER ZUM ANTRIEB VON HYDRAULIKWERKZEUGEN**
PRESSURE LIMITING UNIT FOR A PRESSURE BOOSTER AND A PRESSURE BOOSTER FOR DRIVING OF HYDRAULICS TOOLS
UNITÉ DE LIMITATION DE PRESSION POUR UN MULTIPLICATEUR DE PRESSION AINSI QUE MULTIPLICATEUR DE PRESSION DESTINÉ À L'ENTRAÎNEMENT DES OUTILS HYDRAULIQUES

(30) Priorität: 27.10.2017 DE 102017125250
(43) Veröffentlichungstag der Anmeldung: 01.05.2019
(73) Patentinhaber: TKR Spezialwerkzeuge GmbH, 58285 Gevelsberg (DE)
(72) Erfinder: Zurmühlen, Martin, 44795 Bochum (DE); Enriquez, Heinz, 58455 Witten (DE)
(74) Vertreter: Kalkoff & Partner Patentanwälte PartmbB

(56) Entgegenhaltungen:
- EP-A1- 0 100 784
- EP-A2- 1 970 787
- WO-A2-01/42693
- WO-A2-99/56047
- US-A- 2 938 347
- US-A- 4 548 233

## Beschreibung

Die Erfindung betrifft eine Druckbegrenzungseinheit für einen Druckübersetzer sowie einen Druckübersetzer zum Antrieb von Hydraulikwerkzeugen.

Druckübersetzer der eingangs genannten Art sind in vielfältigen Ausgestaltungen aus dem Stand der Technik bekannt. Sie werden bspw. dazu verwendet, um Hydraulikwerkzeuge, welche bspw. zum Stanzen, Nieten, Clinchen oder Fügen verwendet werden, mit dem für die jeweils durchzuführenden Arbeitsprozesse notwendigen Hydraulikdruck zu versorgen. Zum Antrieb der Druckübersetzer wird dabei üblicherweise Druckluft verwendet, wobei es der Druckübersetzer ermöglicht, einen pneumatischen Niederdruck im Bereich von bspw. 2-10 bar in hydraulischen Hochdruck von 100-600 bar umzuwandeln. Der bereitgestellte Hydraulikdruck dient dabei zum Antrieb von Arbeitskolben der mit dem Druckübersetzer verbindbaren Hydraulikwerkzeuge, welche fluiddicht mit dem Hydraulikanschluss der Hydraulikeinheit verbindbar sind.

Gattungsgemäße Druckübersetzer werden bspw. in Kraftfahrzeugwerkstätten eingesetzt, um hydraulische Stanz- und Nietgeräte anzutreiben, welche bei der Fahrzeugreparatur zum Einsatz kommen können. Eine Versorgung der Druckübersetzer erfolgt dabei über die üblicherweise in Kraftfahrzeugwerkstätten vorhandenen Druckluftleitungen, an welche die Druckübersetzer mit ihrer Pneumatikeinheit direkt angeschlossen werden können. Bei einem gleichbleibend hohen pneumatischen Druck kann dann ein zuverlässiger Betrieb des Druckübersetzers und eines mit dem Druckübersetzer verbundenen Hydraulikwerkzeugs gewährleistet werden.

In Abhängigkeit von dem zu verwendenden Hydraulikwerkzeug und dem mit diesem Hydraulikwerkzeug durchzuführenden Bearbeitungsvorgang ist an dem Druckübersetzer der für den jeweiligen Bearbeitungsvorgang notwendige, an dem Hyraulikanschluss maximal zur Verfügung stehende Hydraulikdruck einzustellen. Bekannte Druckübersetzer weisen hierzu Druckbegrenzungsventile auf, welche die Aufgabe haben, bei einem bestimmten voreingestellten Maximaldruck einen inneren, sogenannten Kurzschlussflüssigkeitskreislauf freizugeben, damit während des Bearbeitungsvorgangs die maximal zulässigen Druckkräfte nicht überschritten werden können.

Eine genaue Einstellung dieses maximalen Hydraulikdrucks über das Druckbegrenzungsventil ist von entscheidender Bedeutung, um zu gewährleisten, dass der durchzuführende Bearbeitungsvorgang mit der geforderten Qualität abgeschlossen werden kann. Bei einem zu frühen Öffnen des Druckbegrenzungsventils wird der Bearbeitungsvorgang nicht mit dem erforderlichen Hydraulikdruck durchgeführt, was bspw. bei einem Nietvorgang dazu führen kann, dass die Verbindung nicht die geforderte Festigkeit aufweist. Ein zu spätes Öffnen des Druckbegrenzungsventils hingegen kann zu einer Beschädigung des oder der zu bearbeitenden Werkstücke führen.

Bekannte Druckbegrenzungsventile weisen zur Einstellung des maximalen Hydraulikdrucks für den jeweiligen Bearbeitungsvorgang einen Schließkörper auf, welcher durch ein Federelement, bevorzug axial, in einen Ventilsitz gedrückt wird. Die durch das Federelement aufgebrachte Federkraft bestimmt den maximal am Hydraulikanschluss zur Verfügung stehenden Hydraulikdruck, bei dem nämlich der Schließkörper entgegen der Federkraft gegenüber dem Ventilsitz verstellt wird und somit den Kurzschlussflüssigkeitskreislauf freigibt.

Bekannte Druckbegrenzungsventile weisen dabei ferner bereits die Möglichkeit auf, die Federkraft über einen Stellkörper festzulegen, an welchem das Federelement abgestützt ist und welcher in Richtung auf den Ventilsitz, ebenfalls bevorzugt axial, verlagerbar ist, wodurch der Hydraulikdruck, bei dem das Druckbegrenzungsventil öffnet, variiert werden kann. Die bekannten Druckbegrenzungsventile weisen jedoch den Nachteil auf, dass diese keine Möglichkeit bieten, den durch die Positionierung des Stellkörpers eingestellten Hydraulikdruck zu erkennen. Vorhandene Skalierungen erlauben keine zuverlässigen Rückschlüsse auf den eingestellten Hydraulikdruck, weshalb eine belastbare Einstellung des Hydraulikdrucks nur unter Zuhilfenahme von separaten Druckaufnehmern erfolgen kann, welche es ermöglichen, festzustellen, welcher Hydraulikdruck über das einstellbare Druckbegrenzungsventil eingestellt ist.

Eine bekannte Druckbegrenzungseinheit ist in der US 4 548 233 offenbart.

Hiervon ausgehend liegt der Erfindung die Aufgabe zugrunde, eine Druckbegrenzungseinheit sowie einen Druckübersetzer zum Antrieb von Hydraulikwerkzeugen bereitzustellen, welche die Möglichkeit bieten, in einfacher Weise eine exakte Einstellung des Hydraulikdrucks vorzunehmen.

Die Erfindung löst die Aufgabe durch eine Druckbegrenzungseinheit für einen Druckübersetzer mit den Merkmalen des Anspruchs 1 sowie durch einen Druckübersetzer mit den Merkmalen des Anspruchs 8. Vorteilhafte Weiterbildungen der Druckbegrenzungseinheit sind in den abhängigen Ansprüchen 2 bis 7 angegeben.

Gemäß der Erfindung weist die Druckbegrenzungseinheit eine Positionserfassungseinheit auf, welche mit dem Stellkörper des Druckbegrenzungsventils derart verbunden ist, dass über die Positionserfassungseinheit die exakte Position des Stellkörpers des Druckbegrenzungsventils ermittelt werden kann. Über die Position des Stellkörpers kann unmittelbar die Einstellung des Federelements und damit der eingestellte Hydraulikdruck ermittelt werden. Je nach Position des Schließkörpers ist das Federelement mehr oder weniger stark vorgespannt und bestimmt somit durch seine Position den eingestellten Hydraulikdruck. Bevorzugt erfolgt die Verstellung des Stellkörpers in axialer Richtung, wobei dann die axiale Position des Stellkörpers ermittelt wird, die den eingestellten Hydraulikdruck bestimmt.

Um die Position, bevorzugt die axiale Position in den eingestellten Hydraulikdruck umzuwandeln, ist die Positionserfassungseinheit mit einer Auswerteinheit gekoppelt, welche der Position des Stellkörpers dem damit eingestellten maximalen Hydraulikdruck zuordnet. Gemäß einer vorteilhaften Ausgestaltung der Erfindung ist dabei in der Auswerteinheit hierzu ein Mikrocontroller angeordnet. In dem Mikrocontroller sind den verschiedenen Positionen, bevorzugt axialen Positionen des Stellkörpers, zugeordnete Hydraulikdrücke hinterlegt. Hierzu können bspw. in dem Mikrocontroller Daten hinterlegt sein, die einer axialen Position einen Hydraulikdruck zuordnen. Die Daten können bspw. zuvor experimentell erfasst worden sein und ermöglichen so, eine exakte Zuordnung der Position zum Hydraulikdruck. Durch eine mathematische Interpolation können mittels dem Mikrocontroller auch solchen Positionen einem Hydraulikdruck zugeordnet werden, die nicht in den Daten erfasst sind. In Abhängigkeit von dem Umfang der im Mikrocontroller hinterlegten Daten kann dabei die Genauigkeit der Auswerteinheit gesteigert werden. Ferner ermöglicht es der Mikrocontroller Einflussfaktoren, bspw. temperaturabhängige Faktoren bei der Ermittlung des Hydraulikdrucks zu berücksichtigen, wobei diese Faktoren ebenfalls im Mikrocontroller verarbeitet werden können.

Eine Anzeige des eingestellten Hydraulikdrucks, bzw. einer von diesem abhängigen Kraft erfolgt dann über eine mit der Auswerteinheit verbundenen Ausgabeeinheit, welche einem Benutzer u. a. den am Druckbegrenzungsventil eingestellten Hydraulikdruck, die entsprechende Kraft und/oder dgl. unmittelbar anzeigt.

Die erfindungsgemäße Ausgestaltung der Druckbegrenzungseinheit ermöglicht es, in einfacher Weise den für den jeweiligen Arbeitsprozess notwendigen Hydraulikdruck über das Druckbegrenzungsventil einzustellen. Der eingestellte Hydraulikdruck wird dabei dem Benutzer unmittelbar an der Ausgabeeinheit angezeigt, sodass dieser keine Versuche unternehmen muss, um festzustellen, ob die Einstellung des Druckbegrenzungsventils dem erforderlichen Hydraulikdruck entspricht. Über die Auswerteinheit kann dabei eine zuverlässige Umsetzung der Position, insbesondere axialen Position des Stellkörpers in den entsprechenden Hydraulikdruck vorgenommen werden, wobei die Auswerteinheit dabei auch Einflussfaktoren wie Temperatur berücksichtigen kann, sodass eine sehr genaue Einstellung des Hydraulikdrucks und damit eine sehr zuverlässige Durchführung der Arbeitsprozesse erfolgen kann.

Die Ausgestaltung der Positionserfassungseinheit ist dabei grundsätzlich frei wählbar. Nach einer besonders vorteilhaften Ausgestaltung der Erfindung ist jedoch vorgesehen, dass die Positionserfassungseinheit einen Weg-Potentiometer aufweist, der mit dem Stellkörper verbunden ist. Die Verwendung eines Weg-Potentiometers zeichnet sich dabei dadurch aus, dass mit diesem in sehr einfacher und kostengünstiger Weise eine exakte Positionserfassung des Stellkörpers, insbesondere axiale Positionierung bei dessen axialer Verstellung vorgenommen werden kann. Der Weg-Potentiometer ist dabei derart mit dem Stellkörper verbunden, dass eine axiale Verstellung des Stellkörpers mit einer entsprechenden Verstellung des Weg-Potentiometers einhergeht. Der Weg-Potentiometer bietet darüber hinaus den Vorteil, dass die üblicherweise mit dem Weg-Potentiometer ermittelbare Änderung des Widerstands in einfacher Weise durch die Auswerteinheit verarbeitet werden kann, wobei die Widerstandsänderungen, ggf. unter Berücksichtigung temperaturabhängiger Faktoren, in den eingestellten Hydraulikdruck umgewandelt werden.

Wie bereits vorstehend dargestellt, ist die Positionserfassungseinheit mit einem vorteilhafterweise vorgesehenen Mikrocontroller der Auswerteinheit verbunden, der die Position des Stellkörpers, bevorzugt dessen axiale Position bei einer axialen Verstellbarkeit, einem eingestellten Hydraulikdruck zuordnet. Die Verwendung eines Mikrocontrollers zeichnet sich dabei dadurch aus, dass neben der Möglichkeit einer Zuordnung der ermittelten Position zu hinterlegten Daten über eine Interpolation auch solchen Positionen ein Hydraulikdruck zugeordnet werden kann, welche nicht in dem Mikrocontroller hinterlegt sind. Darüber hinaus können auch weitere Einflussfaktoren bei der Umsetzung der axialen Position in den Hydraulikdruck einfließen. Darüber hinaus lässt sich der Mikrocontroller besonders einfach und kostengünstig herstellen und ermöglicht damit eine besonders kostengünstige Herstellung des erfindungsgemäßen Druckübersetzers.

Die Darstellung des in der Auswerteinheit ermittelten Hydraulikdrucks kann grundsätzlich in beliebiger Weise erfolgen, wobei hierzu auch die Möglichkeit einer akustischen Anzeige besteht. Nach einer besonders vorteilhaften Ausgestaltung der Erfindung ist jedoch vorgesehen, dass die Auswerteinheit mit einem Display, insbesondere einem E-Ink-Display der Ausgabeeinheit verbunden ist.

Die Verwendung eines Displays, insbesondere eines E-Ink-Displays erlaubt eine besonders gut ablesbare Darstellung des eingestellten Hydraulikdrucks, sodass dem Nutzer eine komfortable Möglichkeit geschaffen wird, den erforderlichen Hydraulikdruck in einfacher Weise einzustellen. Die Verwendung eines E-Ink-Displays zeichnet sich dabei dadurch aus, dass dieses einen nur geringen Energiebedarf besitzt, und darüber hinaus auch im energielosen Zustand die Anzeige des eingestellten Hydraulikdrucks ermöglicht. Insgesamt ist dadurch der Bedarf an elektrischer Energie besonders gering.

Wesentlich für den Betrieb des Druckübersetzers ist eine Versorgung mit Gas- oder Luftdruck zum Antrieb der Pneumatikeinheit. Im Falle der Verwendung einer elektrischen Positionserfassungseinheit, Auswerteinheit und/oder Ausgabeeinheit ist es zudem erforderlich, den Druckübersetzer mit elektrischer Energie zu versorgen. Eine solche Energieversorgung ist grundsätzlich dann unproblematisch, wenn am Einsatzort des Druckübersetzers auch eine ausreichende Energieversorgung mit elektrischer Energie vorhanden ist. Ist dies nicht der Fall, dann kann die Einstellung zwar vorab an anderer Stelle mit ausreichender Energieversorgung erfolgen, eine Änderung des eingestellten Hydraulikdrucks kann dann jedoch im Betrieb nicht ohne Weiteres erfolgen. Auch besteht dann keine Möglichkeit zur elektronischen Dokumentation der Arbeitsvorgänge durch eine besonders vorteilhafterweise vorgesehene Speichereinheit.

Nach einer vorteilhaften Ausgestaltung der Erfindung ist daher vorgesehen, dass die Auswerteinheit, die Positionserfassungseinheit und/oder die Ausgabeeinheit mit einem mit einem Drucklufteingang der Pneumatikeinheit verbundenen Druckluftgenerator verbunden sind. Gemäß dieser Weiterbildung der Erfindung ist vorgesehen, dass über den Drucklufteingang, über den die Pneumatikeinheit mit Druckluft versorgt wird, ein elektrischer Energie erzeugender Druckluftgenerator angetrieben wird. Dies geschieht bspw. durch ein vom Druckluftstrom angetriebenes Generatorrad, welches beim Betrieb der Pneumatikeinheit, d. h., beim Durchströmen einer an den Drucklufteingang angeschlossenen Druckluftleitung elektrische Energie produziert, die dazu nutzbar ist, um die Auswerteinheit, die Positionserfassungseinheit und/oder die Ausgabeeinheit, ggf. auch eine Speichereinheit, mit ausreichend elektrischer Energie zu versorgen.

Auf eine externe Energieversorgung kann durch diese Weiterbildung der Erfindung verzichtet werden. Der Druckluftgenerator erzeugt dabei eine ausreichende Menge an Energie, um die Auswerteinheit, die Positionserfassungseinheit und die Ausgabeeinheit mit ausreichender Energie zu versorgen. Der erfindungsgemäße Druckübersetzer wird durch diese Weiterbildung unabhängig von externen Energieversorgung und ist für den Betrieb allein auf eine Versorgung mit Druckluft bzw. Gasdruck angewiesen. Der Druckluftgenerator kann dabei bspw. in einfacher und komfortabler Weise innerhalb des Druckübersetzers in die vorhandene Pneumatikleitung integriert werden. Von dort aus kann über geeignete Leitungen eine elektrische Versorgung der Verbraucher erfolgen.

Grundsätzlich ausreichend für den Betrieb der Positionserfassungseinheit, der Auswerteinheit und der Ausgabeeinheit ist eine temporäre, d. h. während der Einstellung vorhandene Energieversorgung. Diese kann problemlos während des Einstellprozesses durch den Druckluftgenerator bereitgestellt werden. Nach einer besonders vorteilhaften Ausgestaltung der Erfindung ist jedoch vorgesehen, dass der Druckluftgenerator mit einer Energiespeichereinheit verbunden ist.

Bei der Energiespeichereinheit kann es sich bspw. um einen Akku handeln, welcher die Verbraucher auch dann mit Energie versorgt, wenn der Druckluftgenerator inaktiv ist. Die Verbraucher sind dabei auch mit der Energiespeichereinheit verbunden, um so im Bedarfsfall die für ihren Betrieb notwendige Energie zu erhalten.

Die konkrete Ausgestaltung des Druckbegrenzungsventils und dessen Verbindung mit dem Stellkörper sowie der Positionserfassungseinheit ist grundsätzlich frei wählbar. Nach der Erfindung ist jedoch vorgesehen, dass das Federelement gegenüber einer mit der Positionserfassungseinheit verbundenen Laufhülse abgestützt ist, die axial verschiebbar an einem Ventilgehäuse des Druckbegrenzungsventils gelagert ist. Gemäß der Erfindung bildet die Laufhülse den Stellkörper, über dessen Position die Vorspannung des Federelements und damit des maximalen Hydraulikdrucks einstellbar ist. Die Laufhülse ist dabei axial verschiebbar an dem Ventilgehäuse des Druckbegrenzungsventils gelagert, sodass eine exakte Positionierung der Laufhülse gegenüber dem Druckbegrenzungsventil und damit eine sehr genaue Einstellung des Federelements erfolgen kann. Zudem bietet die Führung der Laufhülse an dem Ventilgehäuse den Vorteil, dass das Druckbegrenzungsventil besonders kompakt ausgeführt werden kann. Zur Ermittlung der axialen Position ist die Laufhülse dabei direkt mit der Positionserfassungseinheit verbunden, um so eine sehr genaue Erfassung der axialen Position zu ermöglichen.

Eine axiale Verstellung des Stellkörpers, insbesondere der Laufhülse kann dabei grundsätzlich in beliebiger Weise erfolgen. Nach der Erfindung ist jedoch vorgesehen, dass die Laufhülse an einem Drehgriff anliegt, der auf einem Gewindeabschnitt des Druckbegrenzungsventils angeordnet ist.

Gemäß der Erfindung erfolgt durch eine Verdrehung des Drehgriffs eine axiale Verlagerung der Laufhülse an dem Ventilgehäuse, wobei in Abhängigkeit von der Drehrichtung die Laufhülse in Richtung auf das Ventilgehäuse verschoben, bspw. von diesem herunterbewegt wird, wobei dabei die Vorspannung des Federelements eingestellt wird. Die Verwendung eines Drehgriffs zeichnet sich dabei dadurch aus, dass die Laufhülse sehr exakt positionierbar ist, wodurch eine sehr gute Einstellmöglichkeit des Hydraulikdrucks gegeben ist.

Die Ausgestaltung des Federelements des Druckbegrenzungsventils kann grundsätzlich in beliebiger Weise erfolgen. Nach einer besonders vorteilhaften Ausgestaltung der Erfindung ist jedoch vorgesehen, dass das Federelement durch eine Schraubendruckfeder gebildet ist, die einenends an dem Schließkörper anliegt und anderenends gegenüber der Laufhülse abgestützt ist, d. h., mit dieser in mechanischer Wirkverbindung steht. Durch diese Ausgestaltung der Erfindung wird ein besonders einfacher und kostengünstiger Aufbau des Druckbegrenzungsventils und damit des Druckübersetzers erreicht. Eine Einstellung der Federkraft durch eine Festlegung der Längserstreckung des Federelements zwischen der Laufhülse und dem Schließkörper ist in besonders einfacher Weise möglich.

Erfindungsgemäß weist die Druckbegrenzungseinheit somit eine Positionserfassungseinheit, eine Auswerteinheit und eine Ausgabeeinheit auf. Die Positionserfassungseinheit ermöglicht es in exakter Weise, die Position, ggf. axiale Position des Stellkörpers und damit den eingestellten Hydraulikdruck zu ermitteln. Die Position, ggf. axiale Position des Stellkörpers wird dabei von der Positionserfassungseinheit an eine Auswerteinheit weitergeleitet, welche die Position in einen eingestellten Hydraulikdruck umwandelt.

Hierzu kann die Auswerteinheit bspw. einen Mikrocontroller aufweisen, welcher unter Rückgriff auf hinterlegte Daten einzelnen Positionen, ggf. axialen Positionen entsprechende Hydraulikdrucke zuordnet. Der Mikrocontroller ist dabei auch dazu geeignet, im Falle der Anordnung des Stellkörpers im Bereich zwischen zwei Positionen, denen im Mikrocontroller ein Hydraulikdruck zugeordnet ist, dieser Position durch Interpolation einen Hydraulikdruck zuzuordnen. Darüber hinaus besteht mittels des Mikrocontrollers die Möglichkeit, Einflussfaktoren, wie bspw. Temperatur, bei der Ermittlung des Hydraulikdrucks zu berücksichtigen.

Eine Anzeige des eingestellten Hydraulikdrucks erfolgt dann über die Ausgabeeinheit, welche hierzu bspw. mit einem Display ausgestattet ist und somit dem Benutzer eine komfortable Anzeige über den eingestellten Hydraulikdruck unmittelbar bei der Einstellung bietet.

Ein Ausführungsbeispiel der Erfindung wird nachstehend mit Bezug auf die Zeichnungen erläutert. In den Zeichnungen zeigen:
- Figur 1: eine perspektivische Ansicht eines Druckübersetzers;
- Figur 2: eine perspektivische Ansicht eines Druckbegrenzungsventils des Druckübersetzers von Figur 1 und
- Figur 3: eine Explosionsdarstellung des Druckbegrenzungsventils von Figur 2.

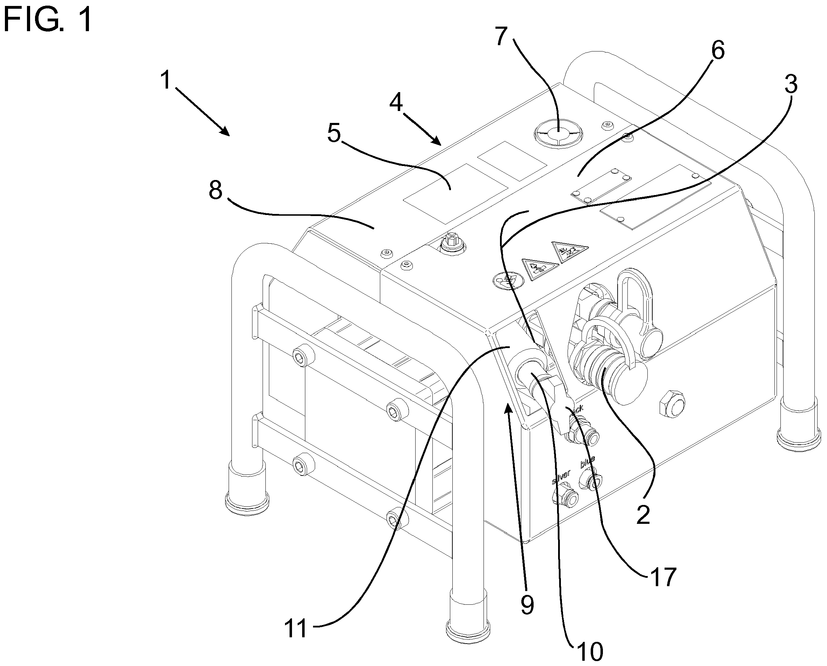

In Figur 1 ist eine Ausführungsform eines Druckübersetzers 1 in einer perspektivischen Darstellung wiedergegeben. Der Druckübersetzer 1 weist an seiner hier nicht sichtbaren, gegenüberliegenden Seite einen Drucklufteingang auf, welcher über eine pneumatische Systemleitung mit einer internen Hydraulikeinheit verbunden ist, in der der pneumatische Druck in einen hydraulischen Druck umgewandelt wird. Über einen Hydraulikanschluss 2 kann der erzeugte Hydraulikdruck dann zum Betrieb von hier nicht dargestellten Hydraulikwerkzeugen, bspw. hydraulisch betriebenen Nietwerkzeugen genutzt werden.

In Abhängigkeit von dem mit dem anzuschließenden Hydraulikwerkzeug durchzuführenden Arbeitsprozess muss der an dem Hydraulikanschluss 2 anliegende Hydraulikdruck auf einen Maximalwert begrenzt werden, wobei dieser derart eingestellt werden muss, dass der Arbeitsprozess mit der notwendigen Kraft durchgeführt wird, jedoch eine Maximalkraft nicht überschritten wird, um eine Beschädigung der Werkstücke zu verhindern.

Der Druckübersetzer 1 weist hierzu ein Druckbegrenzungsventil 9 auf. Das Druckbegrenzungsventil 9 weist dabei in einem Ventilinnenraum eines Ventilgehäuses 14 ein gegen ein Federelement abgestützten Schließkörper auf, welcher einen in dem Ventilgehäuse 14 angeordneten Ventilsitz blockiert. Über einen Drehgriff 17 ist ein Stellkörper in Form einer Laufhülse 10 in axialer Richtung verstellbar, wobei das hier nicht dargestellte Federelement gegenüber der Laufhülse 10 abgestützt ist. Demnach hängt die Federkraft, mit der der Schließkörper gegen den Ventilsitz drückt, von der axialen Position der Laufhülse 10 ab. Eine Verdrehung des Drehgriffs 17 derart, dass die Laufhülse 10 in Richtung auf eine Führungshülse 11 verstellt wird, erhöht die Federkraft und damit den eingestellten Hydraulikdruck, wohingegen eine Verdrehung des Drehgriffs 17 derart, dass die Laufhülse 10 in entgegengesetzter Richtung bewegt wird, die Federkraft und damit den eingestellten Hydraulikdruck reduziert.

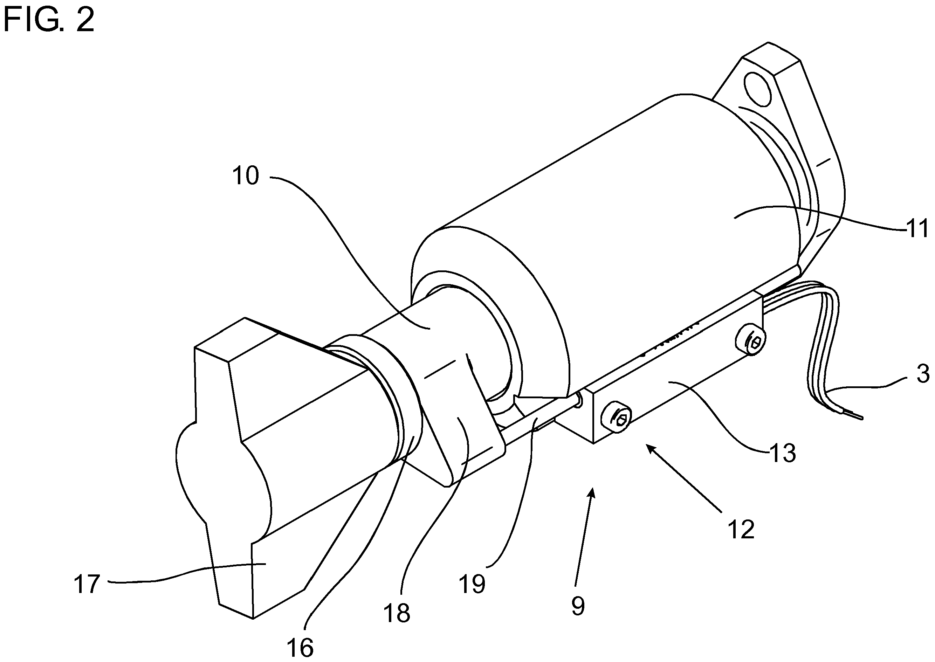

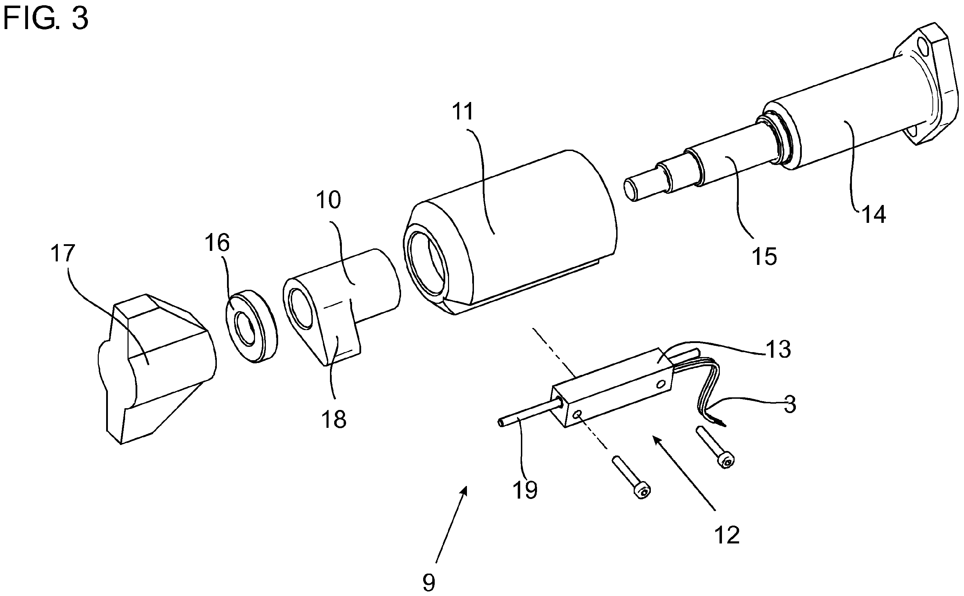

Zur axialen Führung der Laufhülse 10, welche unter Zwischenschaltung eines Distanzrings 16 an dem Drehgriff 17 anliegt, dient die Führungshülse 11, welche das Ventilgehäuse 14 des Druckbegrenzungsventils 9 koaxial umgibt. Die Laufhülse 10 ist dabei derart mit einer gegenüber dem Ventilgehäuse 14 axial verschiebbaren Anschlaghülse 15 verbunden, dass eine Verlagerung der Laufhülse 10 eine entsprechende Verlagerung der Anschlaghülse 15 bewirkt, wobei die Anschlaghülse 15 im Ventilinneren an dem hier nicht dargestellten Federelement anliegt, wobei das Federelement mit seinem der Anschlaghülse 15 gegenüberliegenden Ende an dem hier ebenfalls nicht dargestellten, den Ventilsitz verschließenden Schließkörper anliegt (vgl. Figur 2 und 3).

Zur Ermittlung der axialen Position der Laufhülse 10 und damit der Federvorspannung, dient ein an der Führungshülse 11 angeordneter Weg-Potentiometer 13 einer Positionserfassungseinheit 12. Dieser weist eine Führungsstange 19 auf, welcher an einem Ausleger 18 der Laufhülse 10 befestigt ist. Der Weg-Potentiometer 13 erfasst somit eine lineare, axiale Verschiebung der Laufhülse 10 über eine Widerstandsänderung. Die ermittelte Widerstandsänderung wird über eine elektrische Leitung 3 zu einer Auswerteinheit 6 innerhalb eines Gehäuses 8 des Druckübersetzers 1 weitergeleitet.

Die Auswerteinheit 6 weist dabei einen Mikrocontroller auf, in welchem bestimmten axialen Positionen der Laufhülse, bzw. Widerstandswerten des Weg-Potentiometers entsprechende Hydraulikdrücke des Druckbegrenzungsventils 9 zugeordnet sind. Der Mikrocontroller der Auswerteinheit 6 wandelt dann den erfassten Widerstandswert in den eingestellten Hydraulikdruck um, wobei der Mikrocontroller im Falle der Ermittlung eines Widerstandswerts im Bereich zwischen zwei Widerstandswerten, denen intern ein entsprechender Hydraulikdruck zugeordnet ist, durch Interpolation dem ermittelten Widerstandswert einen Hydraulikdruck zuordnet. Darüber hinaus ist der Mikrocontroller dazu geeignet, Einflussfaktoren, wie z. B. Temperatur bei der Umwandlung der axialen Position der Laufhülse 10 in einen eingestellten Hydraulikdruck zu berücksichtigen.

Eine Anzeige des eingestellten, maximalen Hydraulikdrucks erfolgt über eine E-Ink-Display 5 einer Ausgabeeinheit 4, welche an einer Oberseite des Gehäuses 8 des Druckübersetzers 1 angeordnet ist und dort für den Benutzer gut sichtbar ist. Ein Eingabeelement 7 erlaubt es dem Benutzer, spezifische Eingaben vorzunehmen.

### Bezugszeichenliste

- 1: Druckübersetzer
- 2: Hydraulikanschluss
- 3: Leitung (Positionserfassungseinheit - Auswerteinheit)
- 4: Ausgabeeinheit
- 5: Display
- 6: Auswerteinheit
- 7: Eingabeelemente
- 8: Gehäuse
- 9: Druckbegrenzungsventil
- 10: Stellkörper/Laufhülse
- 11: Führungshülse
- 12: Positionserfassungseinheit
- 13: Weg-Potentiometer
- 14: Ventilgehäuse
- 15: Anschlaghülse
- 16: Distanzring
- 17: Drehgriff
- 18: Ausleger
- 19: Führungsstange

## Patentansprüche

1. Druckbegrenzungseinheit für einen Druckübersetzer zum Antrieb von Hydraulikwerkzeugen, mit einem Druckbegrenzungsventil zur Einstellung des Hydraulikdrucks, mit
- einem durch ein Federelement gegen einen Ventilsitz gedrückten Schließkörper und
- einem verlagerbaren Stellkörper zur Einstellung der Federkraft des Federelements,
wobei
- eine mit dem Stellkörper (10) direkt verbundene Positionserfassungseinheit (12) zur Ermittlung der Position, insbesondere axialen Position des Stellkörpers (10),
- eine Auswerteinheit (6) zur Ermittlung des eingestellten Hydraulikdrucks in Abhängigkeit von der Position, insbesondere axialen Position des Stellkörpers (10) und
- eine Ausgabeeinheit (4) zur Anzeige des eingestellten Hydraulikdrucks vorgesehen sind und
- das Federelement gegenüber dem mit der Positionserfassungseinheit (12) direkt verbundenen und als Laufhülse (10) ausgebildeten Stellkörper abgestützt ist, und
- die Laufhülse (10) mittels eines Drehgriffs (17) axial verschiebbar an einem Ventilgehäuse (14) des Druckbegrenzungsventils (9) gelagert ist, und die Laufhülse (10) an dem Drehgriff (17) anliegt und der Drehgriff (17) auf einem Gewindeabschnitt des Druckbegrenzungsventils (9) angeordnet ist.

2. Druckbegrenzungseinheit nach Anspruch 1, **dadurch gekennzeichnet, dass** die Positionserfassungseinheit (12) einen Weg-Potentiometer (13) aufweist, der mit dem Stellkörper (10) verbunden ist.

3. Druckbegrenzungseinheit nach Anspruch 1 oder 2, **dadurch gekennzeichnet, dass** die Positionserfassungseinheit (12) mit einem Mikrocontroller der Auswerteinheit (6) verbunden ist, der die Position, insbesondere axiale Position des Stellkörpers (10) einem eingestellten Hydraulikdruck zuordnet.

4. Druckbegrenzungseinheit nach einem oder mehreren der vorliegenden Ansprüche, **dadurch gekennzeichnet, dass** die Auswerteinheit (6) mit einem Display, insbesondere einem E-Ink Display (5), der Ausgabeeinheit (4) verbunden ist.

5. Druckbegrenzungseinheit nach einem oder mehreren der vorhergehenden Ansprüche, **dadurch gekennzeichnet, dass** die Auswerteinheit (6), die Positionserfassungseinheit (12) und/ oder die Ausgabeeinheit (4) mit einem mit einem Drucklufteingang der Pneumatikeinheit verbundenen Druckluftgenerator verbindbar ist.

6. Druckbegrenzungseinheit nach Anspruch 5, **dadurch gekennzeichnet, dass** der Druckluftgenerator mit einer Energiespeichereinheit verbindbar ist.

7. Druckbegrenzungseinheit nach einem oder mehreren der vorhergehenden Ansprüche, **dadurch gekennzeichnet, dass** das Federelement durch eine Schraubendruckfeder gebildet ist, die einendes an dem Schließkörper anliegt und anderenends gegenüber der Laufhülse (10) abgestützt ist.

8. Druckübersetzer zum Antrieb von Hydraulikwerkzeugen mit
- einer mittels Gas- oder Luftdruck angetriebenen Pneumatikeinheit,
- einer mit der Pneumatikeinheit verbundenen Hydraulikeinheit mit einem Hydraulikanschluss zum fluiddichten Anschluss des Hydraulikwerkzeugs an die Hydraulikeinheit, aufweisend eine Druckbegrenzungseinheit zur Einstellung des Hydraulikdrucks nach den Ansprüchen 1-7.

## Claims

1. A pressure limiting unit for a pressure booster for driving hydraulic tools, comprising a pressure limiting valve for setting the hydraulic pressure, having
- a closing element that is pushed against a valve seat by a spring element, and
- a displaceable adjusting element for setting the spring force of the spring element, wherein
- a position detection unit (12) that is directly connected to the adjusting element (10) to detect the position, in particular the axial position of the adjusting element (10),
- an evaluation unit (6) for determining the set hydraulic pressure as a function of the position, in particular the axial position of the adjusting element (10), and
- an output unit (4) for displaying the set hydraulic pressure
are provided and
- the spring element is braced against the adjusting element, which is directly connected to the position detection unit (12) and formed as a running sleeve (10) and
- the running sleeve (10) is mounted by means of a rotary handle (17) in an axially displaceable manner on a valve housing (14) of the pressure limiting valve (9) and the running sleeve (10) rests against the rotary handle (17) and the rotary handle (17) is arranged on a threaded section of the pressure limiting valve (9).

2. The pressure limiting unit according to claim 1, **characterized in that** the position detection unit (12) has a positional potentiometer (13) that is connected to the adjusting element (10).

3. The pressure limiting unit according to claim 1 or 2, **characterized in that** the position detection unit (12) is connected to a microcontroller of the evaluation unit (6), which associates the position, in particular the axial position of the adjusting element (10), to a set hydraulic pressure.

4. The pressure limiting unit according to one or more of the preceding claims, **characterized in that** the evaluation unit (6) is connected to a display, in particular an E-Ink display (5), of the output unit (4).

5. The pressure limiting unit according to one or more of the preceding claims, **characterized in that** the evaluation unit (6), the position detection unit (12) and/or the output unit (4) can be connected to a compressed air generator, which is connected to a compressed air inlet of the pneumatic unit.

6. The pressure limiting unit according to claim 5, **characterized in that** the compressed air generator can be connected to an energy storage unit.

7. The pressure limiting unit according to one or more of the preceding claims, **characterized in that** the spring element is formed by a helical compression spring, which rests against the closing element at one end and is braced against the running sleeve (10) at the other end.

8. A pressure booster for driving hydraulic tools, comprising
- a pneumatic unit that is driven by gas or air pressure,
- a hydraulic unit that is connected to the pneumatic unit and that has a hydraulic port
for connecting the hydraulic tool to the hydraulic unit in a fluid-tight manner, comprising a pressure limiting unit for setting the hydraulic pressure according to the claims 1-7.

## Revendications

1. Unité de limitation de pression pour un multiplicateur de pression destiné à l'entraînement d'outils hydrauliques, comprenant une soupape de limitation de pression destinée à régler la pression hydraulique, comprenant
- un corps de fermeture pressé contre un siège de soupape par un élément à ressort et
- un corps de réglage déplaçable, destiné à régler la force de ressort de l'élément à ressort,
dans laquelle
- il est prévu une unité de détection de position (12) reliée directement au corps de réglage (10), destinée à déterminer la position, en particulier la position axiale du corps de réglage (10),
- une unité d'évaluation (6) destinée à déterminer la pression hydraulique réglée en fonction de la position, en particulier de la position axiale du corps de réglage (10) et
- une unité de sortie (4) destinée à afficher la pression hydraulique réglée et
- l'élément à ressort est supporté par rapport au corps de réglage relié directement à l'unité de détection de position (12) et conçu comme une douille (10), et
- la douille (10) est montée de façon axialement déplaçable au moyen d'une poignée rotative (17) sur un boîtier de soupape (14) de la soupape de limitation de pression (9), et la douille (10) s'applique sur la poignée rotative (17) et la poignée rotative (17) est disposée sur un segment fileté de la soupape de limitation de pression (9).

2. Unité de limitation de pression selon la revendication 1, **caractérisée en ce que** l'unité de détection de position (12) présente un potentiomètre de chemin (13) relié au corps de réglage (10).

3. Unité de limitation de pression selon la revendication 1 ou 2, **caractérisée en ce que** l'unité de détection de position (12) est reliée à un microcontrôleur de l'unité d'évaluation (6), lequel attribue la position, en particulier la position axiale du corps de réglage (10) à une pression hydraulique réglée.

4. Unité de limitation de pression selon l'une ou plusieurs de revendications précédentes, **caractérisée en ce que** l'unité d'évaluation (6) est reliée à un écran, en particulier un écran E-Ink (5), de l'unité de sortie (4).

5. Unité de limitation de pression selon l'une ou plusieurs de revendications précédentes, **caractérisée en ce que** l'unité d'évaluation (6), l'unité de détection de position (12) et/ou l'unité de sortie (4) peut/peuvent être reliée(s) à un générateur d'air comprimé relié à une entrée d'air comprimé de l'unité pneumatique.

6. Unité de limitation de pression selon la revendication 5, **caractérisée en ce que** le générateur d'air comprimé peut être relié à une unité de stockage d'énergie.

7. Unité de limitation de pression selon l'une ou plusieurs des revendications précédentes, **caractérisée en ce que** l'élément à ressort est formé par un ressort de pression hélicoïdal, lequel s'applique sur le corps de fermeture par une extrémité tout en étant supporté par rapport à la douille (10) par l'autre extrémité.

8. Multiplicateur de pression destiné à l'entraînement d'outils hydrauliques, comprenant
- une unité pneumatique entraînée au moyen d'une pression de gaz ou d'air,
- une unité hydraulique reliée à l'unité pneumatique, comprenant un raccord hydraulique destiné au raccordement étanche au fluide de l'outil hydraulique à l'unité hydraulique,
présentant une unité de limitation de pression destiné à régler la pression hydraulique selon les revendications 1 à 7.
